# EUROPEAN PATENT APPLICATION

(11) **EP 4 818 000 A1**
(43) Date of publication of application: **07.10.2026**
(21) Application number: 25168614.3
(22) Date of filing: 04.04.2025
(51) Int. Cl.: B62D 13/06, B62D 15/02

(54) **AUTONOMOUSLY PARKING A SEMI-TRAILER BASED ON A MEMORIZED REPRESENTATION OF A SCANNED PARKING AREA**

(71) Applicant: embotech AG, 8005 Zürich (CH)
(72) Inventor: Yazbeck, Dany, 8005 Zürich (CH)
(74) Representative: E. Blum & Co. AG

(57) **Abstract**

The invention is directed to a method of autonomously parking a vehicle (31), which comprises a combination of a tractor truck and a trailer, e.g., a semi-trailer. The method revolves around autonomously steering a vehicle in a traffic aisle (10) adjacent a parking area, towards a target parking space (16), while scanning surroundings of the vehicle with perception sensors to obtain a corresponding representation (350), i.e., a grid of cells. The vehicle is then autonomously parked in reverse based on a repeatedly updated representation, which leverages memorized occupancy states of the cells to compensate for cells that may become occluded during the reversing maneuver. This way, the vehicle can be autonomously parked despite the fact that the field of view becomes at least partly occluded by the trailer during the reversing maneuver. The invention is further directed to related computerized devices, vehicles, and computer program products.

## Description

### TECHNICAL FIELD

The invention relates in general to the field of computerized techniques (computer-implemented methods, computer systems, computer program products and correspondingly equipped vehicles) for autonomously parking vehicles such as semi-trailers. In particular, it is directed to methods that autonomously steer a vehicle, which comprises a combination of a tractor truck and a trailer. The vehicle is first steered in a traffic aisle adjacent a parking area, towards a target parking space, while scanning surroundings of the vehicle with perception sensors to update a corresponding representation, which is a grid of cells. The vehicle is then autonomously parked in reverse based on the updated representation, which leverages memorized occupancy states of the cells to compensate for cells that may become occluded during the reversing maneuver.

### BACKGROUND

In certain hubs or other types of parking areas, trailers are often decoupled from tractors, allowing either autonomous or manual trucks to pick them up for missions. A typical mission is to transport the trailer to a loading area, load a container, and deliver it to an unloading area, then leave the trailer before picking up another. The parking area may thus contain numerous (e.g., hundreds of) trailers, some of which are already loaded, while others are not yet. There may be hundreds of trailers parked, ready to load or unload a container.

These trailers are typically not equipped with perception sensors. When a container is placed on a trailer, the parking position behind the trailer becomes almost entirely obscured during reversing from the Lidar sensors on the tractor truck (normally at the front of the tractor truck). As a result, reversing is not possible without external perception assistance.

However, given the very large number of parked trailers and the typical dimensions of hubs (and other similar parking facilities), implementing an infrastructure-based perception system would require a significant number of Lidars to scan all the required parking positions. Such a solution would be too costly and/or too complex to operate. Moreover, the presence of numerous containers (loaded on the parked trailers) results in casting shadows over the parking positions, which would increase the ratio of sensors to parking positions needed for effective coverage. This would definitively make the deployment and maintenance of an external perception assistance highly complex and prohibitively expensive. Therefore, an affordable, yet effective, solution is needed to park vehicles with trailers autonomously.

### SUMMARY

According to a first aspect, the invention is embodied as a computer-implemented method of autonomously parking a vehicle, which comprises a combination of a tractor truck and a trailer, such as a semi-trailer. **In** the present context, the tractor truck is assumed to include an exteroceptive sensor system, which may for instance be mounted on the front of the tractor truck, e.g., at bumper level. The method revolves around autonomously steering the vehicle based on a repeatedly updated representation of surroundings of the exteroceptive sensor system. The vehicle is steered so as to drive in a traffic aisle adjacent a parking area toward a target parking space in the parking area and then autonomously park in reverse in the target parking space.

The vehicle is autonomously parked based on the updated representation and an updated position of the vehicle relative to this representation. To that aim, signals obtained from the exteroceptive sensor system (while steering the vehicle) are repeatedly processed to repeatedly update the representation and the position of the vehicle relative to this representation. The representation is an occupancy grid of cells. This representation is updated by updating occupancy states of the cells based, on the one hand, on actionable information derived from the signals processed last and, on the other hand, on memorized occupancy states as previously updated for at least some of the cells. These cells typically include cells that become occluded during vehicle maneuvers, particularly during reversing, or, more generally, cells for which no information can be derived from the signals processed last (i.e., the most recently processed signals).

Here, "actionable information" refers to conclusive information (i.e., having practical value) as to the occupancy states of the cells. When the most recently processed signals enable a conclusion regarding the occupancy state of a cell, it is because actionable information can be derived from those signals. The opposite occurs when no actionable information can be derived from the signals processed last (e.g., because the cell is occluded).

The updated representation generally reflects the most current perception by the exteroceptive sensor system. However, the method also memorizes the occupancy states (or statuses) of cells. So, instead of repeatedly and systematically updating states of the cells according to the most current perception, the method keeps track of cell occupancies as previously determined and uses memorized cell states to decide on the states of uncertain cells. Thus, as one understands in the present context, "repeatedly updated representation" here refers to a representation that is continually updated, but not necessarily on the basis of the most recent sensor information alone, insofar as earlier sensor information may be taken into account to compensate for missing information. As a result of the present approach, the vehicle can be autonomously parked despite the fact that the field of view becomes at least partly occluded by the trailer during the reversing maneuver.

The proposed approach does not require external perception, outside of the tractor's perception system, although external perception, if any, may possibly be used on top of the truck's perception. In this regard, in embodiments, the representation is updated according to perception signals obtained from the sole exteroceptive sensor system. That is, only the perception signals obtained from the exteroceptive sensor system are used, without relying on external perception (i.e., perception coming from sensors outside the tractor truck, such as infrastructure-based perception signals).

The coordinates of the target parking place may possibly be communicated in advance to the vehicle. Alternatively, the target parking place is automatically detected, as in embodiments, whereby the vehicle can therefore carry out its mission even more autonomously. That is, the method may further comprise detecting the target parking space as a parking place that is available for parking the vehicle, based on the updated presentation, prior to the vehicle autonomously parking in reverse. In order to be able to detect the available parking place, the vehicle will typically need to at least reach this parking place, if not pass it (i.e., overtake it). So, in typical scenarios, the vehicle is autonomously steered to drive in the traffic aisle so as to pass the target parking area, prior to starting a reversing maneuver and parking in reverse in the target parking space.

Various schemes can be contemplated to update the occupancy states of the cells. In sophisticated embodiments, the occupancy state of each cell is updated not only based on the past occupancy states of that cell but also by taking into account the present and/or past occupancy states of neighboring cells. In simpler (but also more robust) embodiments, the update mechanism relies only on the past occupancy states of each cell. That is, the occupancy states of the cells are updated by first attempting to derive actionable information for each cell of the cells, from the signals processed last. If actionable information can indeed be derived for a cell, its occupancy state is determined based on the derived information. However, failing any actionable information derived for a cell, its occupancy state can still be inferred based on one or more memorized occupancy states as previously determined for this cell, according to the present approach.

In embodiments, the cells are 2D cells. The occupancy states are occupancy states of the 2D cells. The updated representation is thus a 2D occupancy grid, which nevertheless reflects a 3D perception by the exteroceptive sensor system, as captured by (or inferred from) the signals received from the exteroceptive sensor system. As a result, trajectories of the vehicle are determined on mere 2D grids (instead of using 2.5 or 3D grids), which reduces the computational load. For example, an average dimension of each cell of the 2D cells is of between 10 and 30 cm, preferably of between 15 and 25 cm. The occupancy state of each cell can for instance be determined or inferred as one of a free state and an occupied state, although an additional, unknown state can be involved, for reasons that will become apparent below.

In embodiments, the processed signals encode information that is interpretable as hit points of a 3D point cloud. In that case, the occupancy states of the 2D cells can advantageously be determined based on projections of such hit points onto corresponding ones of the 2D cells. This way, the 2D cells can, effectively, still reflect the 3D perception by the sensors-so the 2D cell states still capture any potential collision in the 3D space. And potential occlusions of the cells can still be compensated by memorizing states of the 2D cells, as explained above.

In embodiments, the exteroceptive sensor system includes one or more Lidars (also LIDARs, as in the acronym of "light detection and ranging"). The signals obtained from the one or more Lidars are repeatedly processed, so as to repeatedly perform the following steps. First, a 3D point cloud model is obtained, which is a model of an environment of the exteroceptive sensor system. Second, characteristics of rays emitted by the one or more Lidars are identified. The identified characteristics include hit points of the rays, as well as projections of the hit points of the rays on a plane corresponding to a ground of the parking area. Third, the state of a given cell of the 2D grid is determined based on the identified characteristics, according to two conditions. Given a first height above the plane and a second height above the first height, a necessary and sufficient condition (first condition) for said given cell to be in the occupied state is to be matched by a projection of a hit point located above the first height. In addition, a necessary condition (second condition) for said given cell to be in the free state is to be crossed by a projection of an overhanging ray that has dropped below the second height when passing over said given cell.

An advantage of the above approach is that the first and second conditions above allow the states of several cells to be determined at once, because several cells can be crossed by a same ray projection. I.e., backtracing each ray as proposed above makes it possible to determine the states of all cells that happen to be crossed by the projection of each overhanging ray. Thus, exploiting ray projections are proposed above speeds up the determination of the cell states, which, in turn, speeds up the determination of the trajectories. The proposed approach is thus compatible with high calculation frequencies. For example, the first height can be between 3 and 8 cm, preferably equal to 5 cm, while the second height can be between 12 and 30 cm, preferably equal to 20 cm. Each of the first height and the second height is measured with respect to said plane.

In embodiments, the method further comprises initializing each cell to an unknown state, prior to repeatedly updating the representation. In addition, repeatedly updating the representation comprises revising the state of any cell of the 2D cells that is in the unknown state. This is achieved based on a history of this cell. This history comprises at least one memorized occupancy state as previously determined for this cell. Accordingly, cells in the unknown state may come to be corrected (to become free of occupied cells), thanks to the previous states memorized. In particular, some cells in the unknown states may be latched as free cells, instead of being presumed to be occupied. This allows trajectories to be obtained in absence of full visibility as per the latest perception signals processed. Eventually, the vehicle is autonomously parked in reverse based on a trajectory computed so that the vehicle can only pass through cells that are determined to be in the free state.

Such embodiments imply repeatedly updating a history of each cell. Now, algorithmic iterations are preferably executed at an average frequency that is between 5 and 20 hertz, and more preferably equal to 10 hertz. Such frequencies call for efficient computations. So, in preferred embodiments, the history of each cell is repeatedly updated by taking into account any newly updated occupancy state of each cell, so that the history of each cell is captured by a single cell memory value. This value nevertheless reflects a historical propensity of this cell to be in the free state or the occupied state. This gives rise to a very simple correction mechanism, which exploits the history of the cells to revise the cell states, something that only requires few additional calculations. The overhead is even practically negligible as the historical data restricts to single cell memory values. Relying on a single value allows remarkably simple (and thus fast) calculations, which are easily compatible with frequencies as contemplated herein.

In embodiments, the exteroceptive sensor system includes one or more Lidars having, each, a detection range of at least 60 m, preferably of at least 110 m, and more preferably of at least 200 m at 10% reflectivity. In embodiments, each Lidar of the one or more Lidars has a vertical field of view of at least 30 degrees, preferably of at least 40 degrees. The vertical resolution of said each Lidar is preferably of between 0.05 and 0.5 degrees, more preferably of between 0.1 and 0.3 degrees. The horizontal field of view is of at least 270 degrees, preferably of 360 degrees. The horizontal resolution of said each Lidar is preferably of between 0.01 and 0.4 degrees, more preferably of between 0.08 and 0.2 degrees.

In embodiments, the method further comprises detecting a dynamic obstacle based on the repeatedly updated representation. The method may optionally estimate a collision course of the dynamic obstacle detected with the vehicle. So, the parking maneuver (or whether to continue such a maneuver) can be conditioned on an outcome of detecting the dynamic obstacle and, optionally, on an outcome of the estimated collision course. This makes it possible to secure the process, despite the fact that trajectories are calculated in absence of complete visibility. Note, other security measures may be implemented, as described herein.

In embodiments, the position of the vehicle relative to said representation is repeatedly updated using a GNSS-based method, based on GNSS signals obtained from at least one GNSS antenna. Preferably, the position of the vehicle relative to said representation is repeatedly updated based on both the GNSS signals and the signals obtained from the exteroceptive sensor system, to enable a heterogeneous redundancy check.

In embodiments, the exteroceptive sensor system includes two exteroceptive sensors, preferably two Lidars, which are at two side ends and at a front of the tractor truck, to optimize the field of view. The two exteroceptive sensors are preferably mounted at bumper level, e.g., at a front-left corner and a front-right corner of the tractor truck. Alternatively, the sensors can be mounted on top of the cabin of the tractor truck. However, placing the sensors at the bumper makes it easier to detect obstacles close to the tractor truck, which results in improved safety. In both configurations, however, the resulting angles of the scanned rays may well result in rays reaching under the body of neighboring vehicles, hence the advantages of a backtracing method as described above.

According to another aspect, the invention is embodied as a computerized system for autonomously parking a vehicle comprising a combination of a tractor truck and a trailer, where the tractor truck is assumed to include an exteroceptive sensor system, e.g., mounted at bumper level, as noted above. The computerized system includes processing means (e.g., processors and memory circuits) configured to perform all the steps of a method according to any of the above embodiments.

According to a further aspect, the invention is embodied as a vehicle, preferably a semi-trailer. The vehicle comprises a combination of a tractor truck and a trailer, wherein the tractor truck includes a motion control unit and an exteroceptive sensor system, as described above. The vehicle further comprises a computerized system as discussed above. The computerized system is interfaced with each of the exteroceptive sensor system and the motion control unit, so as to autonomously steer the vehicle, in operation.

According to a final aspect, the invention is embodied as a computer program product for autonomously parking a vehicle comprising a combination of a tractor truck and a trailer, wherein the tractor truck includes an exteroceptive sensor system mounted on top and at a front of the tractor truck, the program instructions executable by processing means of a computerized device interfaced with each of the exteroceptive sensor system and a motion control unit of the tractor truck, to cause the processing means to perform all the steps of a method according to any of the embodiments described above.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 is a top view of a parking facility, showing a vehicle driving in a traffic aisle adjacent a parking area and passing a target parking space in the parking area, as involved in embodiments;
FIG. 2 is a top view of the parking area of FIG. 1, showing the vehicle starting a reversing maneuver and autonomously parking in reverse in the target parking space, as involved in embodiments;
FIG. 3A is a side view (partial view) of a semi-trailer including an exteroceptive sensor system with Lidars mounted at the front of the tractor truck, at the level of the bumper, according to embodiments. FIG. 3B is a front view of the semi-trailer of FIG. 3A;
FIG. 3C is a side view partly showing the front of a tractor truck of a semi-trailer as in FIG. 3A, and depicting the vertical field-of view of a Lidar scanning surroundings of the tractor truck, as involved in embodiments;
FIG. 4 illustrates the geometry of a ray emitted by a Lidar in an elevation plane that is transverse to a reference plane corresponding to the ground level of the parking area, as in embodiments. The elevation plane corresponds to a given azimuth and contains the emitted ray;

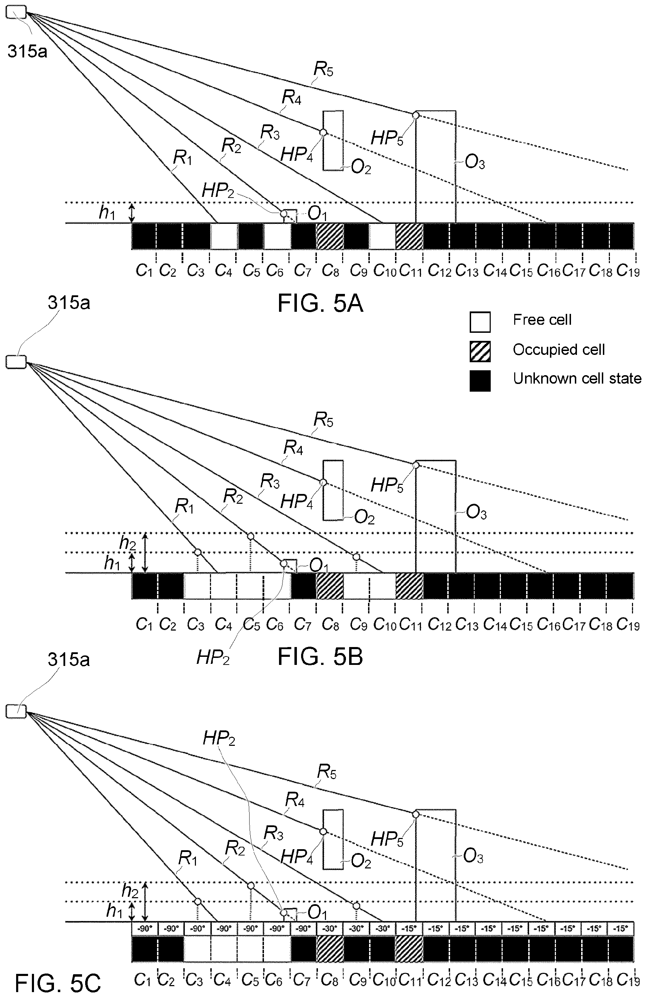

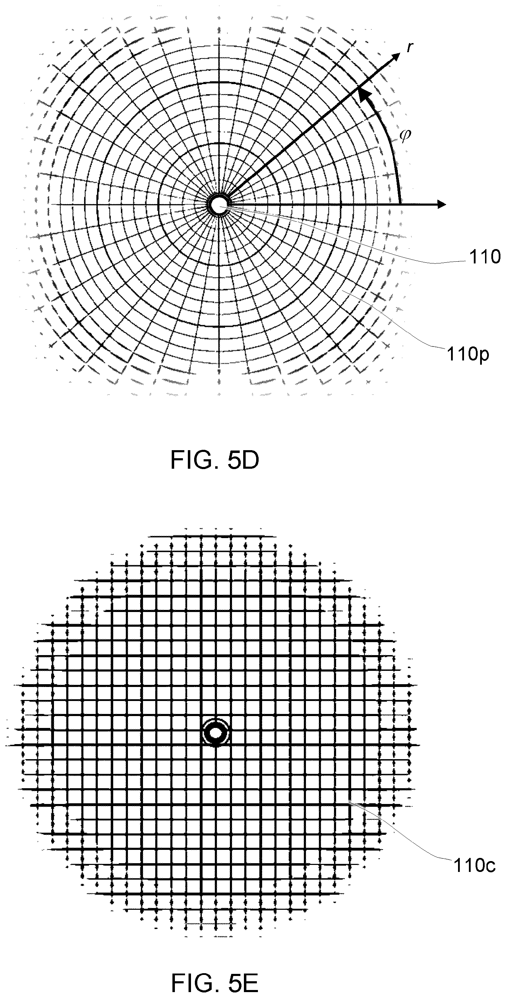

FIGS. 5A to 5C show several rays emitted by a Lidar in a given elevation plane, as well as hit points of such rays. FIGS. 5A - 5C illustrate how the states of cells of an occupancy grid are determined by examining whether certain conditions are met, using a first threshold height defined above the plane and a second threshold height defined above the first threshold height, as in embodiments. The cells shown correspond to cells extending along a given radius, for a given azimuth. FIG. 5D shows a corresponding polar grid, i.e., a grid defined according to a polar coordinate system, whereas FIG. 5E shows a corresponding Cartesian grid, i.e., a grid defined in a Cartesian coordinate system, after conversion, as involved in embodiments;
FIG. 6A is a top view of a semi-trailer as in FIGS. 1, 2, and 3C, illustrating scanning ranges of two Lidars mounted at the front of the tractor truck, one on the front-left corner and another one on the front-right corner of the cabin of the tractor truck, whereby a pedestrian is detected in the surrounding of the semi-trailer, while maneuvering, as in embodiments. FIG. 6B illustrates the scanning range of the front-left Lidar as the semi-trailer turns slightly to the right;
FIG. 7 is a flowchart illustrating high-level steps of a method of scanning surroundings of a tractor truck of a semi-trailer, using an exteroceptive sensor system of the tractor truck, to update a representation (a 2D grid of cells) of surroundings of the exteroceptive sensor system. The representation memorizes past states of cells in this representation to infer states of cells that may become occluded, as in embodiments;
FIG. 8 is a flowchart illustrating high-level steps of a method of autonomously parking a semi-trailer, according to embodiments; and
FIG. 9 is a block diagram schematically illustrating selected components of an autonomous vehicle according to embodiments, including a computerized system and a motion control unit.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Vehicles, computerized systems, computer-implemented methods, and computer program products embodying the present invention, will now be described, by way of non-limiting examples.

### DETAILED DESCRIPTION OF EMBODIMENTS OF THE INVENTION

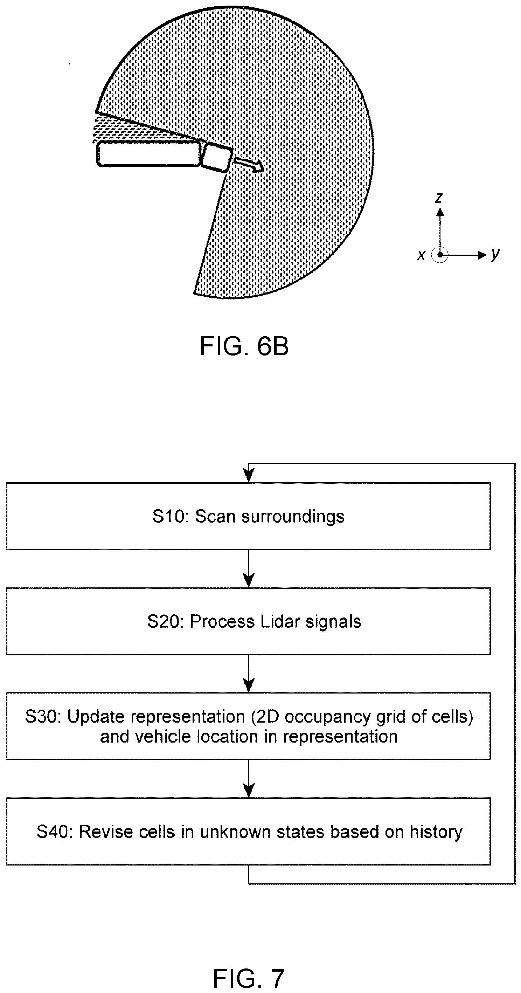

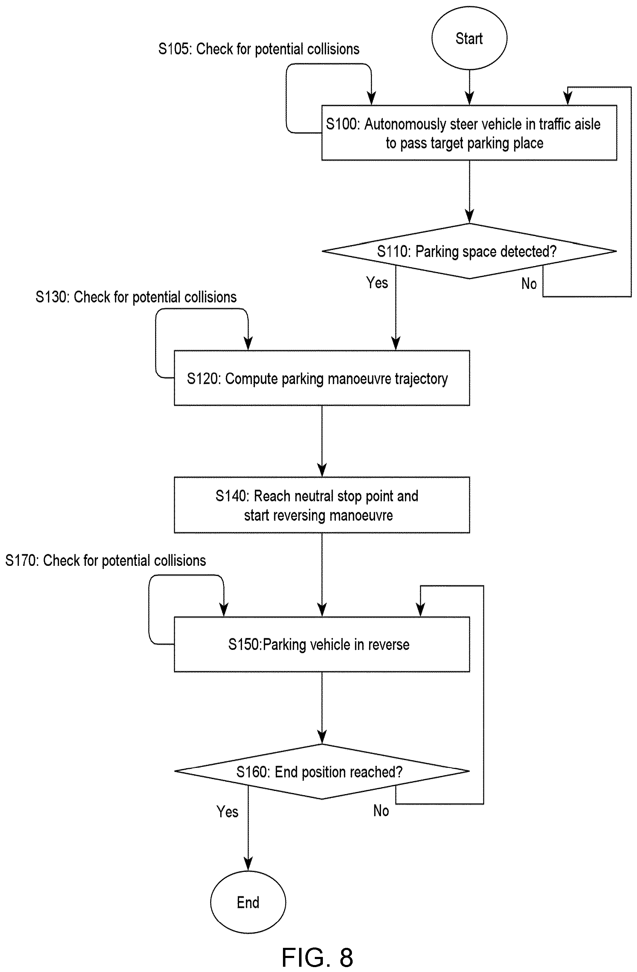

The following description is structured as follows. General embodiments and high-level variants are described in section 1. Section 2 addresses particularly preferred embodiments. Section 3 concerns technical implementation details. Note, the present method and its variants are sometimes collectively referred to as the "present methods". All references Sn refer to methods steps of the flowcharts of FIGS. 7 and 8, while numeral references pertain to devices, components, and concepts involved in embodiments of the present invention.

### 1. General embodiments and high-level variants

### 1.1. Main features and advantages

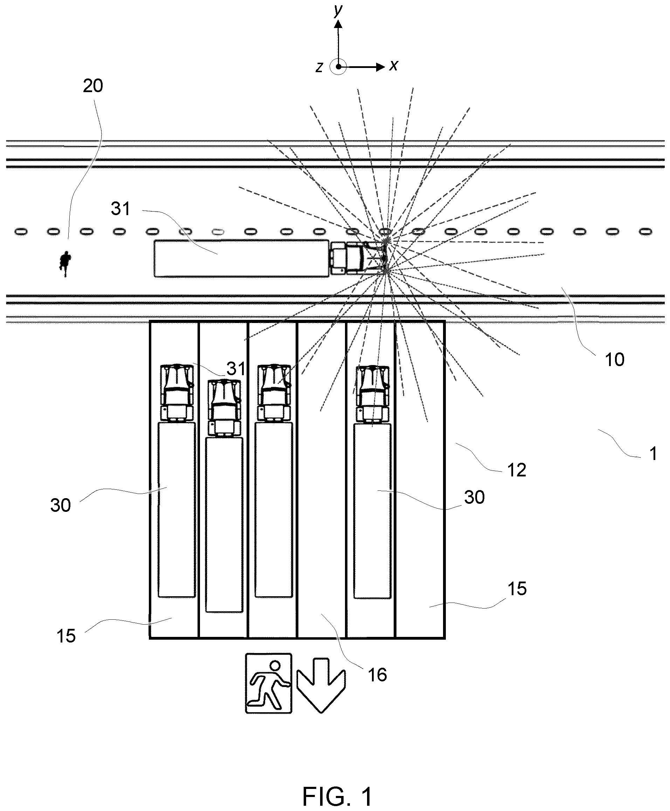

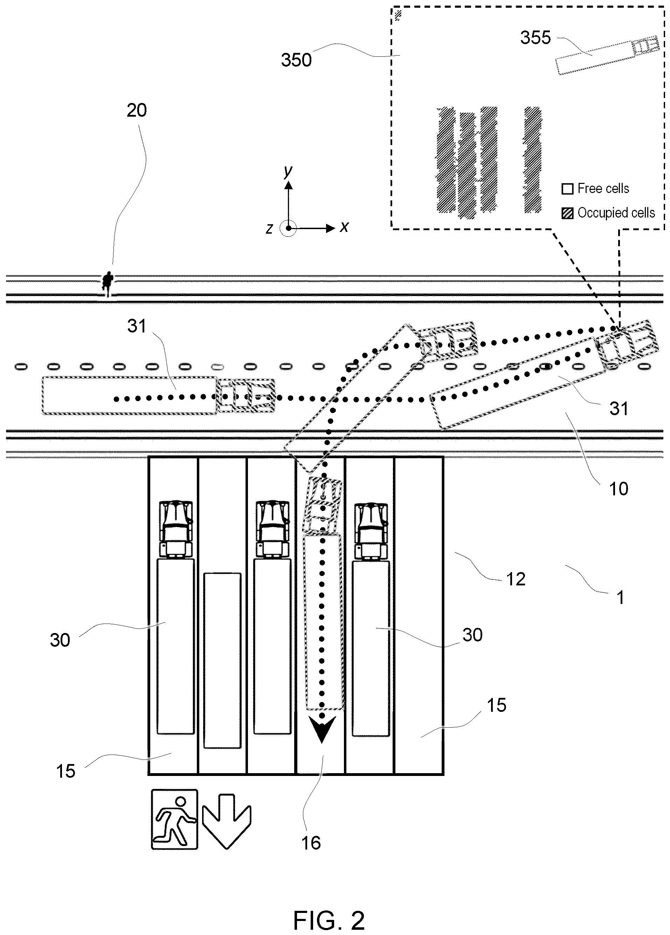

Referring to FIGS. 1, 2, 7, and 8, a first aspect of the invention concerns a computer-implemented method of autonomously parking a vehicle 31 in a parking area 12, which may for instance be located in a hub or some parking facility 1, such as an industrial parking lot or an indoor garage, or a parking lot of a car assembly plant or any other production plant. The context assumed is one in which a traffic aisle 10 extends longitudinally along the parking area 12. The latter includes one or more parking places 15, 16, including a target parking space 16 (i.e., the place where the vehicle 31 is supposed to park), as illustrated in FIGS. 1 and 2. The parking space may have different intended use-cases, such as container loading or unloading or leaving the trailer in the parking space and departing, as explained in the background section.

Generally, the parking directions of the parking places 15, 16 may be in-line and parallel with, or transversal to, the traffic aisle 10. The parking directions may be angled relative to the traffic aisle (also known as herringbone parking). In typical embodiments, the parking places 15, 16 extends longitudinally, along directions that are transversal, or even perpendicular, to the traffic aisle 10. For example, in FIGS. 1 and 2, the parking area 12 includes several parking places 15, 16, which are all parallel and extend, each, perpendicularly to the direction of the traffic aisle 10.

This vehicle 31 is assumed to comprise a combination of a tractor truck and a trailer, where the trailer attaches to the tractor truck. The concept of trailer should here be understood in a broad sense, i.e., it can be a trailer or a semi-trailer (a trailer without a front axle). So, the vehicle is a combination of a tractor truck and a trailer or a combination of a tractor truck and a semi-trailer.

In the present context, the tractor truck is assumed to include an exteroceptive sensor system 315 (i.e., a perception sensor system) mounted on the front of the tractor truck, as assumed in FIGS. 1, 3A- 3C, 6A, and 6B. The exteroceptive sensor system 315 may generally include one or more exteroceptive sensors 315a, 315b. A single sensor can be used, which is arranged at the front (preferably in central position) of the tractor truck, e.g., on top of the cabin 310 of the tractor truck or at the level of the bumper 312. Preferably, use is made of two perception sensors 315a, 315b, which are ideally placed at the front-left and front-right corners of the bumper 312 of the tractor trick (as assumed in FIGS. 1, 3A - 3C, 6A, and 6B), in order to maximize the field of view, notwithstanding the trailer and potential container loaded thereon, while ensuring better obstacle detection at the front of the truck. Such sensors are typically proximity sensors, such as Lidars, radars, or stereo cameras, etc. For instance, use can be made of cameras, which may be located at the level of the rear-view mirrors. More generally, any sensors can be contemplated, which is able to provide signals from which point clouds can be extracted or even inferred (e.g., using machine-learning techniques). Use is preferably made of Lidars 315a, 315b, particularly automotive-grade Lidars. Suitable lidars and systems for attaching such Lidars to vehicles are known *per se.*

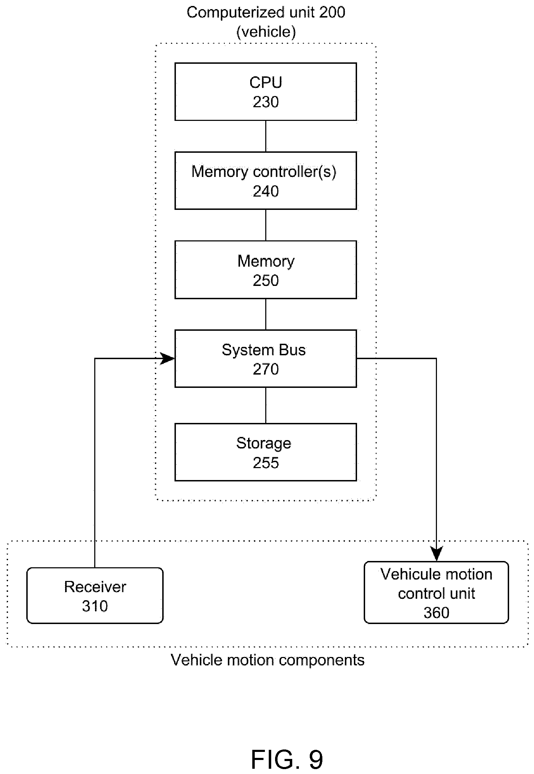

The methods described herein are computer-implemented methods. Such methods are performed by a computerized system 200, which is installed on board the tractor truck. To that aim, the computerized system 200 interfaces with each of a motion control unit 360 of the tractor truck and the perception sensor system 315, as assumed in FIG. 9. The computerized system and the vehicle concern other aspects of the invention, which are described later.

The method involves autonomously steering the vehicle 31, see steps S100, S140, and S150, in the flow of FIG. 8. The vehicle 31 is autonomously steered based on an updated representation of the surroundings of the perception sensor system 315, so as to successively perform the following maneuvers. First, the vehicle autonomously drives S100 in a traffic aisle 10 adjacent a parking area 12, towards target parking space 16 in the parking area 12, as illustrated in FIG. 1. The vehicle 31 may approach the target parking space 16 sufficiently to be able to detect it, as in embodiments. Alternatively, coordinates of the target parking space can be provided as input.

The vehicle may typically come to pass the target parking space 16, as illustrated in FIG. 2. That is, the vehicle 31 may overtake (i.e., go further enough than) the parking space 16, as a human driver would do to be able to reverse park the vehicle 31 in this parking place 16. In the present context, however, this may be necessary to be able to detect if the parking space 16 is free. Moreover, the vehicle trajectory is automatically calculated; it is optimized and therefore normally differs from a trajectory initiated by a human driver. Next, a reversing maneuver is automatically started S140 for the vehicle 31 to autonomously park S150 in reverse in the target parking space 16, as illustrated in FIG. 2. Generally, the same types of maneuvers as described above (i.e., driving, starting the reversing maneuver and parking in reverse) can be considered for other parking configurations such as exemplified earlier.

Importantly, all such maneuvers are autonomously performed based on: (i) a continually updated representation 350 of the surrounding of the vehicle (i.e., a representation of an area of the parking facility 1); and (ii) a continually updated position 355 of the vehicle 31 relative to the updated representation 350, see an illustration in FIG. 2. The position 355 of the vehicle and the representation 350 are updated as follows and, this, while autonomously steering the vehicle 31.

In order to continually update the representation 350 and relative position 355 of the vehicle, the method repeatedly processes S20 signals obtained S10 from the exteroceptive sensor system 315, see FIG. 7. That is, the representation of the surroundings and the relative position of the vehicle 31 are repeatedly updated S30, S40 in accordance with the signals processed.

This representation 350 is an occupancy grid of cells, as seen in FIG. 2. The processed signals encode information interpretable in terms of occupancy states of such cells.

The representation 350 is updated by updating occupancy states of the cells, based, on the one hand, on actionable information derived from the signals processed last and, on the other hand, on memorized occupancy states as previously updated for at least some of the cells. For example, the representation may be updated S30, S40 by determining the occupancy states of each of the cells, based on actionable information available for each cell (according to the signals processed last), should such information be effectively encoded by the signals processed last. This, however, is not guaranteed, if only because some cells may become occluded. So, failing any actionable information available for any cell (as per the signals processed last), the method infers an occupancy state for this cell, based on one or more previous occupancy states as previously updated for this cell. In other words, use is made of previously determined occupancy states to compensate for missing information, if needed. This requires memorizing cell states, i.e., storing them in the main memory of the underlying computerized system. Some heuristic may possibly be used to cache the occupancy states of recurrently problematic cells. The relative position of the vehicle in the grid is updated as the vehicle moves, using any suitable method, e.g., based on the processed signals and/or signals obtained from further onboard sensors (e.g., GNSS antennas and inertial measurement units, IMUs).

Comments are in order. The representation 350 is an occupancy grid of cells, preferably as 2D occupancy grid, as assumed in FIG. 2 and as in embodiments discussed below in detail. The states of cells are thus populated and updated in accordance with information captured by the signals as repeatedly received from the perception sensor system 315 and repeatedly processed by the underlying computerized system 200, should such information be available. As a result, the updated representation reflects a current perception by the exteroceptive sensor system 315. However, the method also memorizes states of the cells, to compensate for the fact that some of the cells may possibly become occluded, especially during the reversing maneuver, in which case information is no longer available for such cells.

In conventional perception methods as used for autonomous vehicles, cells for which no information is available are assumed to be occupied, for safety reasons. In the present context, however, instead of systematically updating states of the cells according to the most current perception, the proposed method keeps track of cell occupancies as previously determined to compensate for missing information. That is, the method attempts to determine occupancy states of the cells based on information derived from the signals received last. However, failing any available (or somehow exploitable) information for any cells in the signals received last, the method then leverages occupancy states as previously determined, e.g., to infer a most probable current state of a cell, even if no information is currently available for that cell, due to occlusion.

In other words, the representation memorizes the occupancy states (or statuses) of cells that it determined previously. The memorized cell states may thus be used to decide on the states of currently uncertain cells, starting with cells that become occluded during the reversing maneuver. Indeed, during the parking maneuver, the target parking space 16 may not be entirely visible anymore by the perception sensor system 315 at the front. Still, the vehicle 31 can trust its memorized scan of the parking area 12, at least to some extent. In practice, the parking maneuver will only be triggered and continued if the cells corresponding to the reversing maneuver (particularly the target parking space 16) are determined to be free or considered free in view of their history. Safeguards may be implemented, as in embodiments described below.

As a result of the present approach, the vehicle 31 can be autonomously parked despite the facts that the field of view becomes at least partly hidden by the trailer during the reversing maneuver, it being noted that use of external perception is not required (i.e., perception outside of the tractor truck's perception system). So, the trailer and the parking facility 1 infrastructure may not include any perception sensor or, at least, the present approach does not require such perception information. This is made possible thanks to fact that the updated representation keeps track of cells of the representation as previously determined. That said, information extracted from external perception could possibly be used on top of information obtained from the tractor truck's perception system.

All this is now described in detail, in reference to particular embodiments of the invention.

### 1.2. Exteroceptive sensor system

To start with, the exteroceptive sensor system 315 (or perception system for short) may, in principle, include any exteroceptive sensor capable of providing sufficient information to update the required representation. In preferred embodiments, the perception system 315 includes one or more Lidars. In principle, a single Lidar is sufficient to determine the 6 degrees of freedom (DoFs) of the system including the Lidar and tractor truck, assuming that an accurate map of the environment is available, as would likely be the case in a controlled environment such as a hub or parking facility. That said, the perception system may include additional onboard sensors, which can be used to determine the position and pose of the vehicle, as in embodiments.

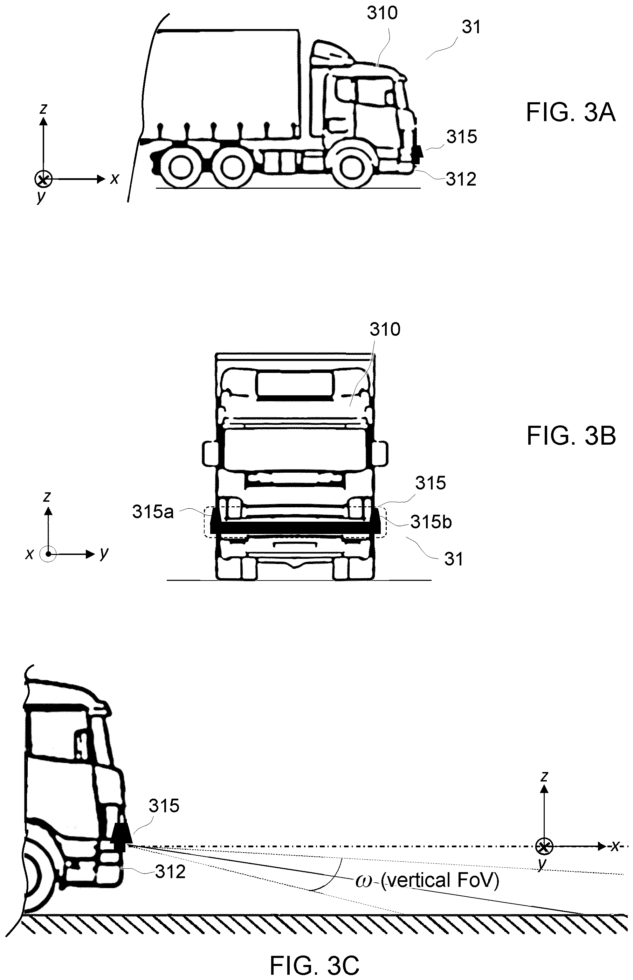

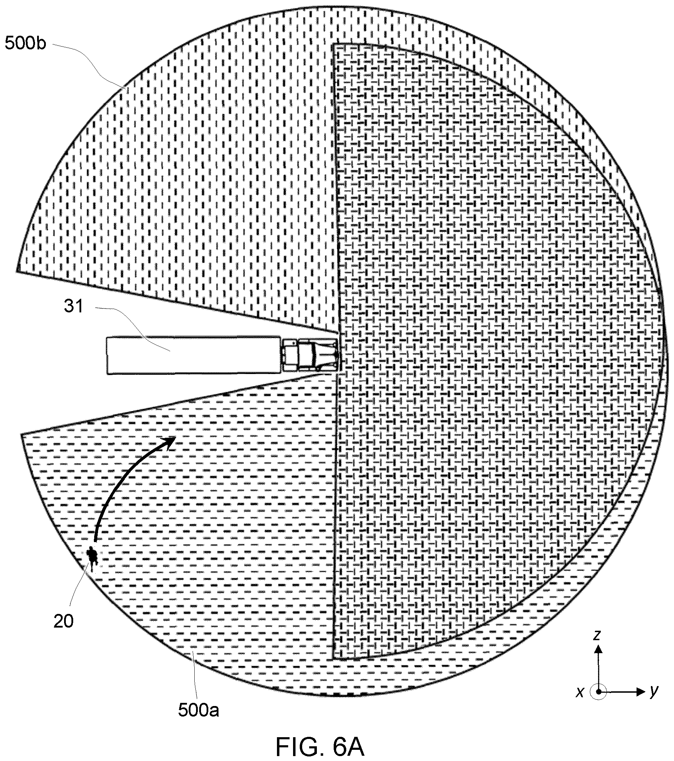

In the following, the system 315 is assumed to include two lidars 315a, 315b, for the sake of illustration. In the example of FIGS. 3A - 3C, the two Lidars are located at the front-left and front-right corners of the tractor truck, at bumper level). The detection ranges 500a, 500b of the two Lidars complement each other to maximize the field of view, notwithstanding the trailer and potential container thereon (see FIGS. 6A and 6B).

In preferred embodiment, the Lidars 315a, 315b used are long-range Lidars. In particular, the Lidars 315a, 315b may have, each, a detection range of at least 60 m, preferably of at least 110 m or even 200 m (at 10% reflectivity). The detection range depends on the power of the laser source, which, in the present context, is typically limited by eye safety regulations. Other factors involve Lidar specifications (e.g., type of laser, aperture size), properties of the scanned objects (e.g., size, distance, reflectivity, diffusion, specular reflection), as well as weather conditions (starting with temperature).

There is, to date, no industry-wide standard for how the maximum range is measured. The maximum range is sometimes measured as the longest distance at which the Lidar can receive a certain number of points on a target of a specified size. In other cases, the maximum range is measured as the longest distance at which the Lidar's detection probability passes a certain percentage, e.g., 90%. One compares the number of points actually returned against a theoretical number of points. ALidar's detection probability typically stays close to 100% from 0 m to a given distance and starts decreasing drastically past that distance. The max range is where it drops to the minimum percentage required. This drop is usually so sharp that a 60% or 90% detection probability usually does not result in a substantial difference in the maximum range.

The reflectivity of the target is a good indicator as it refers to how well the surface of an object reflects light. The higher the reflectivity, the more photons bounce back when hitting the object, thus the more points returned to the Lidar. Reflectivity depends on material properties and surface conditions of the scanned objects. The reflectivity of a black tire is typically lower than that of a black car, itself less than the reflectivity of a white car. Since the reflectivity of a black tire is normally below 10%, this value can adequately be used as a benchmark. The maximum range at 10% reflectivity is thus increasingly adopted by original equipment manufacturers (EOMs).

In embodiments, each Lidar 315a, 315b has a vertical field of view (vertical FoV, noted *ω* in FIG. 3C) of at least 30 degrees, preferably of at least 40 degrees. The vertical resolution of each Lidar is preferably of between 0.05 and 0.5 degrees, and more preferably of between 0.1 and 0.3 degrees. In addition, the horizontal field of view (horizontal FoV) will preferably be larger than or equal to 260 degrees (as assumed in FIGS. 6A), or larger than or equal to 270 degrees (as in FIG. 6B). In fact, full 360° Lidars may be used, whose horizontal FoV will only be limited by the bodies of (or on) the vehicle. The horizontal resolution of each Lidar is preferably of between 0.01 and 0.4 degrees, more preferably of between 0.08 and 0.2 degrees. For example, use can be made of the Hesai OT 128 Lidar, which has a detection range of 200 m at 10% reflectivity and offers a full horizontal 360° FOV and a vertical FOV of 40°

The exteroceptive sensors 315a, 315b can advantageously be placed on the front corners on the tractor truck, e.g., at bumper level, as assumed in FIGS. 3A - 3C. The Lidars can be tilted if needed. They may be arranged at a certain angle (this depending on the available vertical FoV), as assumed in FIG. 3C. A trade-off may be sought between the maximal detection range (how far one wants to be able to scan and detect potential obstacles) and the proximity detection (how close to the truck one wants to be able to detect potential obstacles). For example, one may want to be able to detect any object having sizes as small as 40 cm (or even less) in front of the truck. To achieve this, the Lidars can be mounted at the front of the tractor truck, at bumper height, as assumed in FIG. 3C (not to scale).

In a typical set-up, only the tractor includes an exteroceptive sensor system 315 as described above (e.g., with two lateral Lidars 315a, 315b), while the trailer does not include any sensor. As said, the signals processed may come from the sole perception system 315 of the tractor truck, without using external perception signals, i.e., signals coming from any sensor on/in the trailer, container, or the parking infrastructure. That being said, signals obtained from parking infrastructure sensors, if any, may possibly be used on top of the signals obtained from the system 315, e.g., to reduce blind spots during the reversing maneuver.

Core steps of the present method revolve around repeatedly updating the representation 350 of the surroundings of the perception system 315, which surroundings correspond to a limited area of the parking facility or the hub 1. In addition, the method repeatedly updates a position 355 of the vehicle 31 relative to this representation. In addition, the method may repeatedly update a pose of the vehicle 31 in the representation 350, as illustrated in FIG. 2. The position of the vehicle 31 (relative to this representation) and its pose can, in principle, be updated based on signals obtained from the sole exteroceptive sensors 315a, 315b as used to update the representation, e.g., the Lidars 315a, 315b. That is, using one or two lidars, one can already compute the relative position of the lidars (and thus the vehicle) in the representation, as well as the pose of the sensor system 315. This, together with a model of the vehicle 31, can be used to update both the pose and position of the vehicle.

However, use is preferably made of a GNSS-based method, i.e., one that uses a GNSS module and different protocols, which can typically be chosen automatically by the GNSS module. The GNSS module typically includes positioning sensors, i.e., inertial measurement units (IMUs), as well. The GNSS method can be used on top of the Lidar positioning method, thereby providing a redundant calculation of the vehicle pose. That is, one may advantageously use a GNSS module, in addition to the Lidars, to redundantly compute the vehicle pose (albeit based on heterogeneous signal sources), for more safety. So, in embodiments, the position of the vehicle 31 relative to the representation is repeatedly updated S30 using a GNSS-based method. The GNSS module may possibly include other components, such as GNSS antennas, cameras, etc.

Using on-board sensors simplify the calibration problem, insofar as on-board Lidars can easily be calibrated relative to the reference frame of the tractor truck and any additional onboard sensor (e.g., IMUs, GNSS antennas, etc.) can easily be calibrated with respect to a reference Lidar. That is, all parameters can be more easily determined with respect to the known reference frame of the perception sensor system 315, the relative pose of which with respect to the vehicle is known. So, onboard sensors simplify the sensor-to-machine calibration problem.

### 1.3. Representation (2D grid of cells)

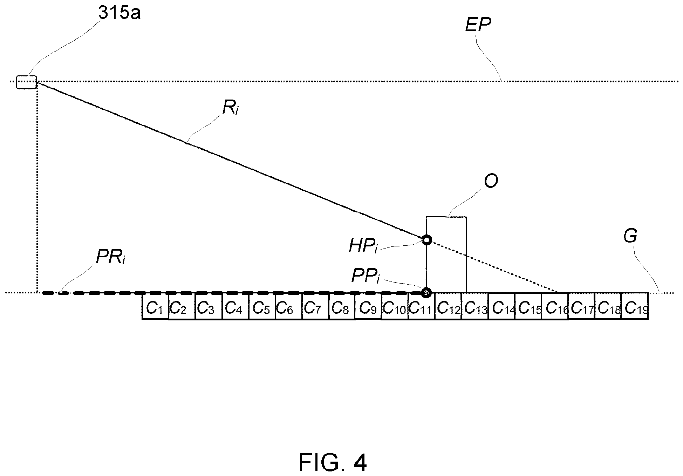

In principle, 2.5 or 3D grids can be contemplated for the representation. However, the representation used is preferably a 2D occupancy grid of cells, as now described in detail in reference to FIGS. 4 - 5C. An average dimension of each 2D cell is preferably of between 10 and 30 cm, e.g., between 15 and 25 cm. So, the cells are 2D cells and their occupancy states pertain to occupancy states of the 2D cells. The updated representation is thus a 2D occupancy grid, which nevertheless reflects a 3D perception by the exteroceptive sensor system 315, as captured by the signals received from the exteroceptive sensor system 315.

In other words, the cells states reflect projections of any object perceived in the 3D space. So, 2D cells still reflect the 3D perception by the sensors 315a, 315b. As a result, the cell states capture, in 2D, any potential collision in the 3D space. Potential occlusions can still be compensated by memorizing previous states of the 2D cells as previously determined. The vehicle 31 can thus be autonomously parked based on the occupancy states of the 2D cells. An advantage of this approach is that trajectories of the vehicle 31 are determined on mere 2D grids (instead of using 2.5 or 3D grids), which reduces the computational load.

### 1.4. Backtracing Lidar rays

In embodiments, the information encoded in the processed signals is interpretable as hit points of a 3D point cloud. The occupancy states of the 2D cells can thus be determined S30, S40 based on projections of the hit points onto corresponding 2D cells, i.e., cells corresponding to the hit points, as illustrated in FIGS. 4 - 5C. That is, the occupancy states are determined by extracting hit points from the signals received and then by calculating projections of the hit points, based on which the occupancy states are obtained.

In more detail, the processed signals encode information as to the latest point cloud model of the surroundings (i.e., the environment) of the exteroceptive sensor system 215. This point cloud is normally encoded as a dataset. By decoding and processing the dataset at each algorithmic cycle (i.e., at each iteration), it is possible to determine hit points, project the hit points on a plane *G* of interest to obtain hit point projections, and accordingly determine the occupancy states of the 2D cells.

In practice, the 2D grid can be updated, at each algorithmic cycle, by: (i) accessing the latest dataset, which captures the latest point cloud model of the environment of the sensor system 315; and (ii) processing the dataset accessed to identify characteristics of rays emitted by each sensor. The determined characteristics may notably include hit points of the rays, as well as projections of the hit points and projections of the rays on a 2D plane corresponding to the ground of the parking area. The grid can then be populated by determining the state of each cell based on the determined characteristics.

Use is preferably made of polar coordinates, thanks to the polar coordinate systems centered on respective exteroceptive sensors. I.e., the reference systems move with the respective sensors, as assumed in FIGS. 4 - 5C. The polar cells are then converted to rectangular cells and the computerized system 200 can maintain absolute positions of the resulting rectangular cells. This gives rise to as complete information as possible about the parking area. In the present context, the memorized area may actually expand as the vehicle moves along the parking area, as opposed to usual, ego-centric maps, which typically have a constant radius at all times.

Referring to FIGS. 3 - 7 (particularly FIGS. 4 - 5C), the occupancy state of each cell can notably be one of a free state and an occupied state, as assumed in FIG. 2. The signals obtained from the Lidars are repeatedly processed S20. That is, algorithmic cycles are repeatedly performed, causing the underlying computerized system 200 to repeatedly perform the following steps. At each cycle, the method first obtains a 3D point cloud model of the environment of the exteroceptive sensor system 315, i.e., the most current 3D point cloud. Points clouds obtained from distinct Lidars may be fused, should two or more Lidars be involved, as in FIGS. 5A - 5C. Next, the method determines (during each cycle) characteristics of rays *Rᵢ* emitted by the Lidars 315a, 315b. Such characteristics include hit points *HPᵢ* of the rays, as well as projections *PRᵢ, PPᵢ* of the hit points and the rays on a reference plane *G* corresponding to the ground of the parking area, see FIG. 4. Finally, the method determines S30 (during each cycle) a state of each cell based on the identified characteristics.

Note, the ground level corresponds to the horizontal plane on which the vehicle 31 rests or drives in the area 1, notably the parking area 12. The ground is typically flat or essentially flat. Small deformations may be present, e.g., ramps, steps, and/or bumps. The reference plane *G* typically is the lowest plane of the ground level, although it may also be taken as an average plane of the ground level, if necessary.

In order to populate the grid, the method determines the state of each cell using the identified characteristics. The underlying scheme involves two threshold heights *h*₁, *h*₂. The first height *h*₁ is defined above the reference plane *G,* while the second height *h*₂ is defined above the first height *h*₁, as illustrated in FIGS. 5A - 5C. The first and second heights are measured with respect to the reference plane *G.* In typical embodiments, the first height is of between 3 and 8 cm, although it is preferably equal to 5 cm, while the second height is of between 12 and 30 cm, and preferably equal to 20 cm.

The states of the cells are determined S30 by assessing at least two conditions. A necessary and sufficient condition (first condition) for each cell to be in the occupied state is to be matched by a projection of a hit point located above the first height *h*₁. In addition, a necessary condition (second condition) for each cell to be in the free state is to be crossed by a projection of an overhanging ray that has dropped below the second height *h*₂ when passing over this cell. While the first condition is a necessary and sufficient condition, the second condition is only a necessary condition, and not a sufficient condition. In particular, the second condition is subject to the first condition. I.e., no overhanging ray can set a cell free if this cell is otherwise matched by a hit point. Moreover, one or more additional conditions may be applied, as exemplified later.

A preferred backtracing process is described in great detail in section 2.

### 1.5. Cell state memorization, unknown cell states, and preferred correction mechanisms

Referring to FIG. 7, the method may first initialize each cell to an unknown state, prior to repeatedly updating the representation. So, the update process may comprise revising S40 the state of any cell in the unknown state based on a history of each cell. The cell history involves at least one previous cell state, i.e., the occupancy state as determined during a previous iteration, whether based on information derived from the most current signals or based on inferred information. Based on the cell history, the present methods may flip cells that are currently in the unknown state to the free state (or not).

That the present methods allow the states of cells in the unknown state to be latched as free cells (their history permitting) will normally be allowed only on an exceptional basis, e.g., only for the reverse parking maneuver. A different approach will likely be chosen when autonomously steering the vehicle 31 in other areas of the facility, where unknown cells may be considered as occupied, by default, for safety reasons.

That said, any 2D cell that remains in the unknown state (when starting the reversing maneuver or when autonomously parking the vehicle 31), notwithstanding the compensation mechanism, will preferably be considered to be in the occupied state, for security reasons. The vehicle 31 is autonomously parked based on a trajectory computed so that the vehicle 31 can only pass through cells that are in the free state. That is, the projection onto the ground plane *G* of the volume swept by (i.e., the spatial envelope of) the vehicle along its trajectory can only go through cells that are considered to be in the free state.

Various correction mechanisms can be contemplated, which exploit the history of the cells to correct the cell states. Preferred mechanisms as described below are ones that only require few additional calculations. The overhead is even practically negligible when the historical data restricts to single cell memory values (as discussed below), as mere arithmetic operations are required in this case. This, added to the fact that the grids are two-dimensional grids, limits the computational load, hence enabling computations at high frequencies.

In preferred embodiments, the history of each cell is captured by a single cell memory value. This memory value reflects a historical propensity of each cell to be in the free state or the occupied state. This memory value is updated at each iteration. Thus, the state of any cell for which no actionable information can currently be derived from the signals processed last can nevertheless be inferred in accordance with its respective memory value, as updated last.

Relying on a single value allows remarkably simple and thus fast calculations, which are easily compatible with frequencies as contemplated herein.

A concurrent update mechanism may additionally be involved, to allow each cell to gradually "forget its past", for security reasons. I.e., in embodiments, the single cell memory value is further updated, at each iteration, so that an absolute value thereof is decreased if the state of the corresponding cell is determined to be the unknown state. Moreover, cell memory values can be constrained to belong to a given interval of values. This gives rise to a safeguard that avoids unreasonable growth of the cell memory values. This interval determines a period of time after which the revision procedure can no longer infer a free or occupied state, should the cell be repeatably determined to be in the unknown state.

For example, each cell memory value can be defined as an integer value, which is updated so that it is incremented by 1, respectively decremented by 1, if the cell is determined to be in the free state, respectively the occupied state. In addition, the memory cell value is modified so that its absolute value is decremented by 1 if the cell is determined to be in the unknown state. That is, the cell memory value is computed as a count, which is incremented, decremented, or left unchanged, in accordance with the state of the cell as determined last from the perception. The endpoints of the safeguard interval consist of integer values of opposite signs. The interval considered can typically be [-10, 10]. Restricting to integer values further simplifies calculations; only integer arithmetic operations are required.

Schemes are discussed above not only compensate for occluded cells, but also more generally for any intermittent detection problems of any kind.

### 1.6. Commands and trajectories

Vehicle trajectories are determined based on the updated grid 350 and then forwarded to the motion control unit 360 of the vehicle 31 to steer it. The above algorithmic cycles are repeatedly performed, so as to repeatedly update the vehicle trajectory, taking into account potential changes in the environment of the vehicle 31. The motion control unit 360 typically includes a drive-by-wire (DbW) system. Updating a trajectory amounts to determining a new trajectory, albeit close to the previous trajectory. Trajectories sent to the DbW system are translated into commands for the electromechanical actuators of the DbW system. I.e., the automated system takes control of the vehicle, which will accordingly start, accelerate, brake, steer, and stop, so as to move from one location to another. Practically speaking, a trajectory can be defined as series of commands for respective actuators (acceleration, steering, and braking) and for successive time points. That is, such commands form a timeseries that embody a trajectory, which is determined in accordance with a goal set in space, or preferably set in both space and time. Successive trajectories (as determined at successive iterations) involve successive sets of commands (where each command is associated with a respective timestamp), which partly overlap in time.

The algorithmic iterations are preferably executed at an average frequency that is between 5 and 20 hertz, and more preferably equal to 10 hertz. Such frequencies call for efficient computations. Now, an advantage of the present approach is that trajectories are determined on mere 2D grids (instead of 2.5 or 3D grids), which reduces the computation load. In addition, the above conditions allow the states of several cells to be determined at once. In particular, the way the second condition is formulated means, in practice, that backtracing each ray makes it possible to determine, at once, the states of all cells crossed by the projection of an overhanging ray that has dropped below the second height. In practice, the method may loop through the point cloud obtained from the Lidars to determine the state of each cell of the corresponding grid. In other words, exploiting ray projections speeds up the determination of the cell states.

Note, a dataset processed at iteration i concerns rays that have likely been emitted during a previous iteration. The iteration frequencies and the Lidar operations can be adjusted so that any dataset processed at iteration i concern rays that have been emitted during the immediately preceding iteration *i* - 1. The exact implementation, however, may depend on the iteration frequency sought.

### 1.7. Data fusion, polar grids, and rectangular cells

Several 2D grids can be concurrently updated for respective Lidars, when two or more Lidars are involved. In that case, data from the initial occupancy grids (corresponding to respective Lidars) can be fused, to obtain a single representation. However, as noted earlier, the initial grids may initially be defined in polar coordinates-they will normally be converted into cartesian grids before being merged, as discussed in the previous section.

In detail, the grid associated with each Lidar is initially defined as a polar grid, i.e., a grid defined according to a polar coordinate system, a pole of which corresponds to a location of each sensor. Each cell is defined by a given radius and a given azimuth. So, when determining the states of the cells, a further condition can be applied to each cell for it to be in a free state, should this cell be an outer cell on a same azimuth and at a larger radius than an inner cell that is matched by a projection of an inner hit point of a reference ray. According to this further condition, no overhanging ray is allowed to set this outer cell in a free state if this overhanging ray has already passed below the inner hit point when passing over the outer cell. This additional condition reduces the likelihood that cells within a vehicle's area will be marked as free.

A possible practical implementation relies on elevation angles of the rays. In that case, the identified characteristics further include such elevation angles. The further condition can be enforced by comparing an elevation angle of the overhanging ray with an elevation angle of the reference ray. The elevation angle of the overhanging ray must be larger than the elevation angle of the reference ray to be allowed to set the outer cell in a free state. Such an implementation is particularly efficient because any valid hit point sets the minimal elevation required for all outer cells.

The fusion is preferably carried by computing, for each overlapping cell of the respective occupancy grids, a value based on the state of each of the corresponding initial cells. The computed value is then associated with the fused cell. This value can for instance be computed as a count, which is incremented, decremented, or left unchanged, in accordance with the determined states of the initial cells. That is, this value is incremented (e.g., by a unit value, or 1) if a corresponding initial cell has a free state, decremented (e.g., by 1) if the initial cell has an occupied state, and left unchanged if the cell has an unknown state. In other words, the present methods may implement a simple voting system, whereby each Lidar votes for 1, - 1, or 0, according to whether a cell is occupied, unoccupied or unknown. This makes it possible to simply "fuse" information, thereby reducing the amount of data for downstream processing. The voting mechanism operate on rectangular cells.

### 1.8. Collision avoidance

Referring to FIGS. 1, 2, 6A and 8, the present methods may involve a collision avoidance scheme, which detects S130, S170 a dynamic obstacle 20 (e.g., a pedestrian in the examples of FIGS. 1, 2 and 6A) based on the repeatedly updated representation. This scheme optionally estimates S130, S170 a collision course of the dynamic obstacle 20 detected with the vehicle 31. As a basic precaution, whether to start the reversing maneuver and continue parking the vehicle 31 can be conditioned on an outcome of the above detection step and, in particular, on an outcome of the estimated collision course.

For example, if a pedestrian signature (or footprint) is detected throughout successively updated representations 350, the present methods may simply abort an ongoing parking maneuver. More sophisticated embodiments may further simulate a collision course, e.g., by extrapolating the current trajectory of the detected pedestrian 20, as symbolized by a curved arrow in the example of FIG. 6A. If this extrapolation leads to conclude to a possible collision (e.g., because of the speed and/or direction of the pedestrian), then the maneuver is aborted. Else, the maneuver can be continued. For example, comparing the pedestrian signatures obtained in the successive configurations of FIGS. 1 and 2 leads to conclude that this pedestrian is walking away from the trajectory of the vehicle 31 upon reverse parking, such that the maneuver can be continued in this example.

Various dynamic obstacle collision avoidance techniques are known in the field of autonomous vehicles, which are normally used to steer vehicles autonomously along driveways. Such techniques can advantageously be re-used in the context of parking a vehicle as discussed herein. Such dynamic obstacle collision avoidance techniques require a sufficient detection range. Thus, use is preferably made of Lidars 315a, 315b having at least 200 m detection range at 10% reflectivity, as noted earlier. In addition, safe exits can be provided notably at the back of the parking places 15, 16, as indicated in FIGS. 1 and 2, to allow pedestrians to escape, if necessary.

### 1.9. Other aspects of the invention

### 1.9.1. Computerized systems and computer program products

Referring to FIGS. 9 and 10, another aspect of the invention concerns a computerized system 200 for autonomously parking a vehicle 31. As explained earlier, this vehicle is assumed to involve a combination of a tractor truck and a trailer. The tractor truck includes an exteroceptive sensor system 315, e.g., mounted at the front of the tractor truck. Preferably, the sensor system 315 includes two exteroceptive sensors 315a, 315b (e.g., two Lidars), which are mounted at two side ends and at a front of the tractor truck. The two sensors 315a, 315b are preferably mounted at a front-left corner and a front-right corner, at the level of the bumper 312, as in FIGS. 3A - 3C. Alternatively, the sensors can be mounted on top of the cabin 310.

The computerized system 200 includes processing means 230, 250, which are configured to perform steps as described earlier in reference to the fist aspect of the invention. The computerized system 200 further comprises various interfaces (i.e., involving software, computer hardware, and peripheral devices, or any combination thereof), which form an interface system (or simply "interface", for short). The interface system may possibly include one or more physical interface units. In all cases, this interface system makes it possible to interface the processing means with each of the perception sensor system 315 and the motion control unit 360 of the vehicle 31. In practice, the control unit 360 may notably include, or essentially amount to, a DbW motion controller. The control unit 360 typically forms part of the actuation system of the vehicle 31, as assumed in FIG. 9.

The interface system of the computerized system 200 is adapted to receive signals from the perception sensor system 315, possibly from any perception sensor thereof, individually, or from a processing system (not shown) of the perception sensor system, where this processing system may take care of fusing grid data. Conversely, the interface system may relay signals from the processing means 230, 250 to trigger and control perception. In addition, the interface system can send signals to, and receive signals from, the control unit 360 of the actuation system of the vehicle 31. As said, the actuation system 360 may notably include actuators and/or motors, to steer the vehicle (as known per se).

So, the processing means 230, 250 are configured to communicate with each of the control unit 360 and the perception sensor system 315, through the interface (and bus) system. The processing means 230, 250 can otherwise process data, starting with data received through the interface. In particular, the processing means are able to process signals obtained from the perception sensors. If necessary, the signals transmitted by the perception sensors may be preprocessed by respective sensor processing systems (not shown) before being passed to the processing means 230, 250. The processing means are otherwise configured to implement steps as described above, with a view to performing methods as described herein.

As usual, the processing means 230, 250 may include one or more processors (e.g., a CPU 230, as well as one or more GPUs) and memory circuits, the latter enabling a main memory. In operation, the processors read from and write to the main memory. Some redundancy may be ensured, if necessary. In addition, the computerized system typically includes a persistent storage 255, which may store computerized methods as described earlier in the form of software instructions. In operation, such computerized methods can be loaded in the main memory 250, for the processing means 230 to implement method steps as described above, through the interface(s).

The computerized system 200 may have to be safety-certified to ensure integrity of the memorized representation of the environment, such that any corruption thereof is detectable and results in an automatic abortion of the current maneuver. To that aim, the system 200 may comprise distinct sets of processors, or even involve distinct computers, which may be assigned different or redundant tasks. In variants, the control unit may be embodied as a single computer, provided that its sets of processors are sufficiently safe. An example of suitable functional safety standard is defined by the ISO26262 standard for the development of electrical and electronic systems in road vehicles.

A closely related aspect of the invention concerns a computer program product for autonomously parking a vehicle 31 as described above. The program instructions are executable by processing means of a computerized system 200 as described above. This, in operation, causes the processing means to perform steps methods as described herein. Additional technical implementation details concerning computerized systems and computer program products are provided in Section 3.

### 1.9.2. Vehicles

Referring to FIG. 9, another aspect of the invention concerns a vehicle 31 such as described earlier. This vehicle can be regarded as a combination of a tractor truck and a trailer (e.g., in a semi-trailer configuration), which may be loaded with a container, or not. The tractor truck includes an exteroceptive sensor system 315, e.g., mounted at the front of the tractor truck, and a computerized system 200, as described earlier. The vehicle 31 may solely rely on perception signals obtained from this exteroceptive sensor system 315, without requiring external perception. That said, external perception can be used on top of the present methods, as noted earlier.

The above embodiments have been succinctly described in reference to the accompanying drawings and may accommodate a number of variants. Several combinations of the above features may be contemplated. Examples are given in the next section.

### 2. Particularly preferred embodiments

### 2.1. Preferred computer architecture

FIG. 9 is a block diagram that schematically illustrates selected components of an autonomous vehicle 31 according to embodiments. The diagram highlights the integration of various hardware components, which can be involved in the autonomous vehicle operation. The diagram shows the main computerized system 200, which interfaces with the motion control unit 360 and the exteroceptive sensor system 315. The computerized system comprises processing means, such as a CPU 230, memory 250, and long-term storage 255, which are interconnected via a system bus 270. The exteroceptive sensor system includes two Lidars 315a, 315b mounted on the tractor truck, providing data for the computerized system to process and update the area representation and vehicle's position. The system 200 otherwise computes trajectories for the vehicle and the motion control unit 360 is responsible for executing the computed trajectories, allowing the vehicle 31 to autonomously steer and park.

The two Lidars 315a, 315b preferably communicate with respective processing systems (not shown), forming part of the perception sensor system 315. Such processing systems process the Lidar output data to decode the 2D grids. The grids are then fused, before being processed by the main computerized system 200 to repeatedly estimate the cell states and accordingly compute trajectories for the vehicle to perform maneuvers as described in section 1. The system 200 may itself involve redundant processing means to determine and verify the vehicle trajectories. If necessary, an auxiliary perception (based on different types of sensors, such as cameras) is used to validate trajectories computed from the main perception 315. The validated trajectories are then passed to the DbW system of the vehicle 2, to accordingly steer the latter. All components of the computerized system 200 may have to be suitably synchronized. To that aim, a backend unit if the vehicle 31 may coordinate all subsystems and components, e.g., they can be synchronized according to a networking protocol for clock synchronization.

### 2.2. Preferred flow

FIG. 7 is a flowchart depicting high-level steps of a method for scanning the surroundings of a tractor truck (with a semi-trailer) equipped with an exteroceptive sensor system. The process begins with step S10, where the surroundings are scanned using the sensor system as the vehicle progresses. The signals obtained from the Lidars are then processed in step S20 to extract relevant information about the environment. In step S30, the representation of the surroundings is updated, forming a 2D occupancy grid of cells, and the vehicle's location within this representation is determined. Finally, step S40 involves revising the states of cells that are currently in unknown states (because no actionable information can be derived from the signals processed last) based on their history. This ensures that the updated representation accurately reflects the current environment of the vehicle, notwithstanding potential occlusions that may occur during the maneuver.

FIG. 8 is a flowchart detailing the steps involved in autonomously parking a vehicle in reverse. The process begins with the vehicle autonomously steering in a traffic aisle adjacent to a parking area to pass the target parking place (step S100). Once a parking place is detected (step S110: Yes), a parking maneuver trajectory is computed (step S120). The reversing maneuver is initiated at step S140, causing the vehicle to reach a neutral stop position. The vehicle is then parked in reverse (step S150). The process continually checks if the end position is reached (step S160).

In addition, the process recurrently checks for any collision (steps S105, S130, and S170), whether with static or dynamic obstacles. Each time a potential detection is detected, the vehicle is stopped or, at least, the current maneuver is recomputed. The perception system 315 may for instance keep on scanning the environment of the vehicle after the vehicle has stopped and the computerized system 200 may restart the pending maneuver when there is no risk of collision anymore. Alternatively, a timer is set, whose time duration may depend on a collision course previously detected. When the timer expires, the representation is updated and, absent any collision risk, a new trajectory is calculated, and the pending maneuver is restarted.

More sophisticated maneuver scenarios may be contemplated. For instance, restarting the maneuver may involve moving the vehicle out of its current parking space (where it is partially parked) to reach a new neutral stop point and restart a new reverse parking maneuver.

### 2.3. Reverse maneuver

The reversing maneuver implies determining a trajectory for the vehicle 31 to park the vehicle accordingly. Practically speaking, a trajectory can be defined as series of commands for respective actuators acceleration, steering, and braking and for successive time points, as noted earlier. Eventually, validated trajectories are forwarded to the DbW system of the vehicle 31, in the form of commands containing instructions with respective execution times, as usual in the art. Such commands are designed to be executed by respective electromechanical actuators of the DbW system to cause the vehicle to follow a drivable trajectory, e.g., in accordance with a goal set in space and time.

As known *per se,* several models and control algorithms can be used to generate commands for acceleration, steering, and braking, such as proportional-integral-derivative PID controllers, model predictive control MPC, linear quadratic regulator LQR, fuzzy logic controllers, and/or neural networks and machine learning models. In addition, a model of the vehicle 31 may typically be involved in performing the reversing maneuver. This, however, may not always be needed, particularly where use is made of a policy trained by reinforcement learning.

### 2.4. Preferred backtracing and fusion algorithms

Rotating Lidars lend themselves well to determining the 2D grids in polar coordinates. I.e., 3D laser scanning Lidars operate by scanning multiple directions, in several elevation planes. FIGS. 4 - 5C focus on a single elevation plane, i.e., a plane corresponding to a given azimuth *φ*. Thus, the grid obtained for each sensor is preferably a polar grid, i.e., a grid defined according to a polar coordinate system, as shown in FIG. 5A. The pole 320 of the polar grid 320p corresponds to the location of a respective Lidar (assumed to be Lidar 315a in these examples). Each resulting cell is defined by a given value of radius r and a given azimuth (angle *φ* in FIG. 5D). Once it has been populated, a polar grid can be converted into a cartesian grid, leading to rectangular (possibly square) cells 320c, to ease data fusion, as in embodiment discussed below. To determine the state of a cell in the polar grid, the point cloud can be processed point by point, where each point corresponding to an emitted laser ray.

Each Lidar may scan its surroundings by emitting pulses at constant elevation angles in an elevation plane rotated around the zenith direction. I.e., a light ray comb is 360° scanned around the zenith direction, where the rays in a given elevation plane have respective, constant angles from the reference plane *EP* of the Lidar, see FIG. 4. Each Lidar may for instance allow up to 64 000 points per full rotation. The elevation angles are preferably separated by at most one degree of angle in the elevation plane, i.e., the plane transverse to plane *G* and corresponding to a given azimuth. The angles of the rays may span a range of at least 30 degrees of angle in each elevation plane. For example, each lidar may scan 32 rays distributed between -16° and +15° with respect to a given reference angle (called zero angle), itself inclined with respect to the reference plane *EP* of the Lidar. Several Lidars can have different zero angles, depending on how they are arranged across the area 5. That said, the present invention does not depend on a particular Lidar configuration.

FIG. 4 illustrates the geometry of a given ray *Rᵢ*, as emitted by a Lidar in a given elevation plane. This elevation plane is transverse to the reference plane *G* (corresponding to the ground of the parking area) and corresponds to a given azimuth *φ*. This elevation plane contains one or more emitted ray *Rᵢ;* it preferably contains several rays, emitted at different angles, as shown in FIGS. 5A - 5C. A ray *Rᵢ* may happen to hit an object *O*, thus leading to a hit point *HPᵢ.* In FIG. 4, the projection of the hit point *HPᵢ* in the plane *G* is denoted by *PPᵢ,* while the projection of the ray in the plane *G* is denoted by *PRᵢ.* The ground plane *G* decomposes into several cells *Cᵢ*(*i* = 1 to 19), which may possibly be matched by a hit point projection or crossed by a ray projection. The plane *EP* is parallel to the reference plane *G* and corresponds to a reference plane of the Lidar, from which ray angles are measured. Similar notations are used in FIGS. 5A - 5C.

As illustrated in FIG. 5A, a hit cell (represented as a square with upward diagonal stripes) is a cell that matches a hit point projection. A similar pattern is used in FIG. 2. A hit cell typically includes the hit point projection, although a tolerance may be applied, such that a given hit point, having a given hit projection, may possibly match several cells. A cell is marked as occupied if it can be assigned a hit point that is above the first threshold height *h*₁ above ground (e.g., 5 cm), as per the first condition described above. If the hit point is below this height, then it cannot set this cell in the occupied state. In the example of FIG. 5A, the ray *R*₂ hits the object *O*₁, yielding a hit point *HP*₂*.* Since this hit point is located below the first threshold height *h*₁, it cannot set the corresponding cell *C*₆ in an occupied state; this cell *C*₆ may thus eventually be declared free, as assumed in the example of FIG. 5A. In other words, the first threshold height *h*₁ allows a tolerance, under which hit points do not count as true obstacles for the vehicle. However, the rays *R*₄ and *R*₅ respectively hit objects *O*₂ and *O*₃, yielding respective hit points *HP*₄ and *HP*₅*.* As such hit points are above the first threshold height *h*₁, the cells matched by the corresponding hit point projections (not explicitly shown in FIG. 5A, in the interest of clarity) are declared occupied, in accordance with the first condition. Again, this condition is not only necessary but is also sufficient to mark the corresponding cells as occupied cells. FIG. 5A only enforces the first condition.

FIG. 5B further enforces the second condition. As illustrated in FIG. 5B, the second condition applies to all cells that happen to be crossed by the projection of an overhanging ray (i.e., a ray passing over this cell), provided that this ray has already dropped below the second threshold height *h*₂ without hitting a hit point when passing over such cells. That is, it is necessary that a ray has dropped below *h*₂ when passing above a cell of interest to mark this cell free, subject to the first condition, as well as other potential conditions, if any. The second condition is a necessary condition: a cell can only be marked free if it is crossed by a projection of an overhanging ray that has already dropped below the second height without hitting a hit point when passing over this cell. Since the Lidar rays are emitted at constant angles, further cells along the same ray may possibly be marked free, unless such cells happen to match a hit point projection, by virtue of the first condition. For instance, backtracing the ray *R*₁ allows both cells *C*₃ and *C*₄ to be marked free, as opposed to FIG. 5A (again, FIG. 5A only enforces the first condition, while FIG. 5B enforces both the first and second conditions). However, the second condition may be augmented with a further condition, as now discussed in detail.

As vehicles do not reach down to the ground everywhere, free cells may occur even within the area spanned by a vehicle. A further condition is thus preferably applied to address this issue. As said, the grid is preferably defined according to a polar coordinate system. The pole of the polar grid corresponds to a sensor location, such that each cell is defined by a given radius and a given azimuth, as illustrated in FIG. 5D. The aim of this further condition is to lower "false" free cells, notably within the area spanned by a vehicle. FIG. 5C enforces this further condition, in addition to the first and second conditions. Consider an outer cell (e.g., cell *C*₉ or *C*₁₀) on the same azimuth, but at a larger radius, than an inner cell (e.g., cell *C*₈), which is matched by the projection of an inner hit point *HP*₄ of a reference ray *R*₄. In that case, no overhanging ray is allowed to set the outer cell *C*₉ or *C*₁₀ in a free state if this overhanging ray has already passed below the inner hit point *HP*₄ when passing over the outer cell considered (be it *C*₉ or *C*₁₀). As a result, the ray *R*₃ cannot set cells *C*₉ and *C*₁₀ to a free state because it has already passed below *HP*₄ when passing over cells *C*₉ and *C*₁₀.

A practical implementation may for instance use elevation angles of the rays. In that case, the characteristics identified further include elevation angles of the rays. The further condition is enforced by comparing the elevation angle of each ray (e.g., *R*₃) passing over an outer cell of interest with the elevation angle of a reference ray (e.g., *R*₄) that led to the critical hit point *HP*₄*.* According to this further condition, the elevation angle of the overhanging ray *R*₃ must be larger than the elevation angle of the reference ray *R*₄ to be allowed to set the outer cell *C*₉ or *C*₁₀ in a free state. Because *R*₄ leads to a hit point that is above *h*₁ at the level of cell *C*₈, the ray *R*₄ sets a minimal elevation angle for any ray that may potentially set outer cells to a free state, such as ray *R*₃. And because the elevation angle of *R*₃ is less than the minimal elevation angle required, *R*₃ cannot set cell *C*₉ or *C*₁₀ to a free state. In other words, if a hit point is found, the elevation of the corresponding ray is defined as the minimum elevation angle for all outer cells on the same azimuth. Such an approach is computationally efficient. FIG. 5C shows the minimal elevation angles applicable to each cell. This further condition notably prevents cells within a vehicle's area to be unduly marked as free.

To summarize, in preferred embodiments, hit points above the ground level *G* but below a defined height value *h*₁ are considered irrelevant, i.e., the corresponding cell can be marked as free (FIGS. 5A- 5C). Furthermore, each ray contains not only information about the cell below the hit point, but also about the cells on the way to this hit point. So, as soon as a ray on the way to a hit point drops below a defined height value *h*₂ (e.g., 20cm), the cells in vis-a-vis can be assumed to be free as well (FIGS. 5B, 5C). Still, where a hit point is found, the elevation angle of the corresponding ray is defined as the minimum elevation angle for all outer cells, i.e., cells residing at a larger radius on the same azimuth, see FIG. 5C. Then, rays that hit such an outer cell at a lower height than *h*₁ but have passed below a legal hit point (i.e., above *h*₁) are not allowed to set the cell free.

### 2.5. Cell state management

Sometimes, the actual cell states may be unknown, e.g., because no information is available, due to occlusion. While such cells would normally be assumed to be occupied (by default, for security reasons), an alternative is to consider a further cell state, i.e., the unknown (or undetermined) state. So, cells may further be set to the unknown state, as illustrated in FIGS. 5A - 5C, where unknown cells are represented as black squares. In this case, one may advantageously initialize each of the cells to the unknown state, by default, and, this, at each algorithmic cycle. Then, the method may determine the state of each cell by iterating (during each algorithmic cycle) over each ray to infer a state of each cell that is impacted by each ray. I.e., the states of the cells are determined by looping through the point cloud, at each algorithmic cycle. Any occluded cell normally results in an unknown state. Each of the conditions described earlier is assessed in view of each ray, such that the procedure only needs a single loop through the rays to infer the states of all grid cells. This approach is effective because a same ray can impact several cells, due to the second condition and the further condition.

As a result of the initialization procedure, the states of the cells that are not determined to be in a free state or an occupied state at the end of an iteration remain the unknown state, by default. In particular, the state of any cell that is not allowed to be in a free state (e.g., because of occlusion) remains the unknown state. The present methods may nevertheless refine unknown states of cells, by leveraging the history of this cell, as explained in section 1.

As also explained earlier, embodiments of the present methods iterate over the rays to assess the first condition (based on threshold height *h*₁), the second condition (based on threshold height *h*₂), and the further condition (based on minimal elevation angles). Preferred algorithms will attempt to find, for each cell, the highest hit point and set the elevation angle of this hit point as a minimal elevation angle for all outer cells (larger radius, same azimuth), if only to ensure that no ray reaching under a vehicle can set cells within a vehicle's area to a free state.

Because some vehicles happen to substantially deflect lidar rays, the point cloud of the vehicle can be sparse. To avoid free cells within the vehicle, heuristics can be implemented to infer the state of neighboring cells (in the 2D plane parallel to the ground) based on states of any hit cell. I.e., not only a hit point can be used to determine the state of cells on the path of the corresponding ray projection but, in addition, it can be used to infer the state of lateral cells (along neighboring azimuths). Such a correction heuristic can be propagated from one azimuth to the next to improve the accuracy of the cell states.

### 3. Computerized systems and computer program products

Computerized devices can be suitably designed for implementing embodiments of the present invention as described herein. In that respect, it can be appreciated that the methods described herein are non-interactive, i.e., automated, although human input may be required in certain cases, e.g., should an anomaly or emergency be detected. Automated parts of such methods can be implemented in software, hardware, or a combination thereof. In exemplary embodiments, automated parts of the methods described herein are implemented in software, as a service or an executable program (e.g., an application), the latter executed by suitable digital processing devices.

In the present context, the computerized system may involve several processing systems, involving respective sets of processors or, even, one or more respective computers. A suitable computer will typically include at least one processor, and a memory (possibly several memory units) coupled to one or memory controllers. Each processor is a hardware device for executing software. The processor, which may in fact comprise one or more processing units (e.g., processor cores), can be any custom made or commercially available processor, likely subject to some certification.

The memory typically includes a combination of volatile memory elements (e.g., random access memory) and nonvolatile memory elements, e.g., a solid-state device. The software in memory may include one or more separate programs, each of which comprises an ordered listing of executable instructions for implementing logical functions. The software in the memory captures methods described herein in accordance with exemplary embodiments, as well as a suitable operating system (OS). The OS essentially controls the execution of other computer (application) programs and provides scheduling, input-output control, file and data management, memory management, and communication control and related services. It may further control the distribution of tasks to be performed by the processors.

The methods described herein shall typically be in the form of executable program, script, or, more generally, any form of executable instructions.

In exemplary embodiments, each computer further includes a network interface or a transceiver for coupling to a network. In addition, each computer will typically include one or more input and/or output devices (or peripherals) that are communicatively coupled via a local input/output controller. A system bus interfaces all components. Further, the local interface may include address, control, and/or data connections to enable appropriate communications among the aforementioned components. The I/O controller may have additional elements, which are omitted for simplicity, such as controllers, buffers (caches), drivers, repeaters, and receivers, to allow data communication.

When a computer is in operation, one or more processing units executes software stored within the memory of the computer, to communicate data to and from the memory and/or the storage unit (e.g., a hard drive and/or a solid-state memory), and to generally control operations pursuant to software instruction. The methods described herein and the OS, in whole or in part are read by the processing elements, typically buffered therein, and then executed. When the methods described herein are implemented in software, the methods can be stored on any computer readable medium for use by or in connection with any computer related system or method.

Computer readable program instructions described herein can be downloaded to processing elements from a computer readable storage medium, via a network, for example, the Internet and/or a wireless network. A network adapter card or network interface may receive computer readable program instructions from the network and forwards such instructions for storage in a computer readable storage medium interfaced with the processing means. All computers and processors involved can be synchronized using any suitable protocol (e.g., NTP) or thanks to timeout messages.

Aspects of the present invention are described herein notably with reference to a flowchart and a block diagram. It will be understood that each block, or combinations of blocks, of the flowchart and the block diagram can be implemented by computer readable program instructions.

These computer readable program instructions may be provided to one or more processing elements as described above, to produce a machine, such that the instructions, which execute via the one or more processing elements create means for implementing the functions or acts specified in the block or blocks of the flowchart and the block diagram. These computer readable program instructions may also be stored in a computer readable storage medium.

The flowchart and the block diagram in the accompanying drawings illustrate the architecture, functionality, and operation of possible implementations of the computerized systems, methods of operating it, and computer program products according to various embodiments of the present invention. Note that each computer-implemented block in the flowchart or the block diagram may represent a module, or a portion of instructions, which comprises executable instructions for implementing the functions or acts specified therein. In variants, the functions or acts mentioned in the blocks may occur out of the order specified in the figures. For example, two blocks shown in succession may actually be executed in parallel, concurrently, or still in a reverse order, depending on the functions and the algorithm optimization involved. Also, each block and combinations thereof can be adequately distributed among special purpose hardware components.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, several architecture variants may be contemplated for the computer system 200, which involves one or more distinct computers.

### REFERENCE LIST

- 1: Parking facility, hub
- 10: Traffic aisle
- 12: Parking area
- 15: Parking place
- 16: Target parking space
- 20: Dynamic obstacle (pedestrian)
- 30: Parked vehicles
- 31: Ego vehicle
- 200: Computerized system
- 230: CPU, processors
- 240: Memory controller(s)
- 250: Memory
- 255: Storage
- 270: System bus
- 310: Receiver
- 315: Exteroceptive sensor system (perception system)
- 315a: Lidar (front-left)
- 315b: Lidar (front-right)
- 350: Updated representation
- 355: Updated position & pose of the ego vehicle
- 360: Vehicle motion control unit
- 500a: Detection range (front-left Lidar)
- 500b: Detection range (front-right Lidar)

## Claims

1. A computer-implemented method of autonomously parking a vehicle (31) comprising a combination of a tractor truck and a trailer, wherein the tractor truck includes an exteroceptive sensor system (315), the method comprising:
autonomously steering (S100) the vehicle (31) based on an updated representation of surroundings of the exteroceptive sensor system, for the vehicle to
drive in a traffic aisle adjacent a parking area (12), towards a target parking space (16) in the parking area (12), and
autonomously park (S150) in reverse in the target parking space (16) based on the updated representation and an updated position of the vehicle relative to said representation; and
repeatedly processing (S20) signals obtained (S10) from the exteroceptive sensor system (315) while steering the vehicle (31) to repeatedly update (S30, S40) said representation and said position of the vehicle, wherein
the representation is an occupancy grid of cells, and
the representation is updated by updating occupancy states of the cells based on actionable information derived from the signals processed last and based on memorized occupancy states as previously updated for at least some of the cells.

2. The computer-implemented method according to claim **1,** wherein
the method further comprises detecting the target parking space (16) as a parking place that is available for parking the vehicle, based on the updated presentation, prior to the vehicle autonomously parking (S150) in reverse, and
the vehicle (31) is, preferably, autonomously steered (S100) to drive in the traffic aisle to pass the target parking area, prior to starting (S140) a reversing maneuver and parking (S150) in reverse in the target parking space (16).

3. The computer-implemented method according to claim **1** or **2,** wherein the occupancy states of the cells are updated (S30, S40) by
attempting to derive actionable information for each cell of the cells, from the signals processed last to determine an occupancy state of said each cell based on the derived actionable information, or,
failing any actionable information derived for said each cell, inferring the occupancy state of said each cell based on one or more memorized occupancy states as previously determined for said each cell.

4. The computer-implemented method according to any one of claims **1** to **3,** wherein
said cells are 2D cells and the occupancy states are occupancy states of the 2D cells, whereby the updated representation is a 2D occupancy grid, an average dimension of each cell of the 2D cells being preferably of between 10 and 30 cm, and more preferably of between 15 and 25 cm, and
the occupancy state of each cell of the 2D cells is determined or inferred as one of at least a free state and an occupied state.

5. The computer-implemented method according to claim **4,** wherein
the processed signals encode information that is interpretable as hit points of a 3D point cloud, and
the occupancy states of the 2D cells are determined (S30, S40) based on projections of the hit points onto corresponding ones of the 2D cells.

6. The computer-implemented method according to claim **5,** wherein
the exteroceptive sensor system (315) includes one or more Lidars (315a, 315b), and
the signals obtained from the one or more Lidars (315a, 315b) are repeatedly processed (S20) to repeatedly
obtain a 3D point cloud model of an environment of the exteroceptive sensor system (315),
identify characteristics of rays (*R*ᵢ) emitted by the one or more Lidars (315a, 315b), the characteristics including hit points (*HPᵢ*) of the rays, as well as projections (*PRᵢ, PPᵢ*) of the hit points of the rays on a plane (G) corresponding to a ground of the parking area, and
determine (S30) a state of a given cell of the cells based on the identified characteristics, whereby, given a first height (*h₁*) above the plane and a second height (*h₂*) above the first height,
a necessary and sufficient condition for said given cell to be in the occupied state is to be matched by a projection of a hit point located above the first height, and
a necessary condition for said given cell to be in the free state is to be crossed by a projection of an overhanging ray that has dropped below the second height when passing over said given cell.

7. The computer-implemented method according to claim **6,** wherein
the first height is between 3 and 8 cm, preferably equal to 5 cm, while the second height is between 12 and 30 cm, preferably equal to 20 cm, and
each of the first height and the second height is measured with respect to said plane.

8. The computer-implemented method according to any one of claims **4** to **7,** wherein
the method further comprises initializing said each cell to an unknown state, prior to repeatedly updating said representation,
repeatedly updating the representation comprises revising (S40) the state of any cell of the 2D cells in the unknown state based on a history of said any cell, said history based on at least one memorized occupancy state as previously determined for said any cell, whereby the occupancy state of said any cell if inferred based on said history, and
the vehicle (31) is autonomously parked in reverse based on a trajectory computed so that the vehicle can only pass through cells that are in the free state.

9. The computer-implemented method according to claim **8,** wherein the method further comprises
repeatedly updating a history of said each cell based on the updated occupancy states of the cells, so that the history of said each cell is captured by a single cell memory value that reflects a historical propensity of said each cell to be in the free state or the occupied state.

10. The computer-implemented method according to any one of claims **1** to **9,** wherein
the exteroceptive sensor system (315) includes one or more Lidars (315a, 315b) having, each, a detection range of at least 60 m, preferably of at least 110 m, and more preferably of at least 200 m at 10% reflectivity.

11. The computer-implemented method according to claim **10,** wherein each Lidar of the one or more Lidars (315a, 315b) has
a vertical field of view (ω) of at least 30 degrees, preferably of at least 40 degrees, a vertical resolution of said each Lidar being preferably of between 0.05 and 0.5 degrees, more preferably of between 0.1 and 0.3 degrees, and
a horizontal field of view is of at least 270 degrees, preferably of 360 degrees, a horizontal resolution of said each Lidar being preferably of between 0.01 and 0.4 degrees, more preferably of between 0.08 and 0.2 degrees.

12. The computer-implemented method according to claim **10** or **11,** wherein
the method further comprises detecting (S130, S170) a dynamic obstacle based on the repeatedly updated representation and, preferably, estimating (S130, S170) a collision course of the dynamic obstacle detected with the vehicle (31), and
parking the vehicle (31) is conditioned on an outcome of detecting the dynamic obstacle and, preferably, an outcome of the estimated collision course.

13. The computer-implemented method according to any one of claims **1** to **12,** wherein
the position of the vehicle (31) relative to said representation is repeatedly updated (S30) using a GNSS-based method, based on GNSS signals obtained from at least one GNSS antenna, and
the position of the vehicle (31) relative to said representation is preferably updated based on both the GNSS signals and the signals obtained from the exteroceptive sensor system.

14. The computer-implemented method according to any one of claims **1** to **13,** wherein
the representation is updated (S30) according to perception signals obtained from the sole exteroceptive sensor system (315).

15. The computer-implemented method according to any one of claims **1** to **14,** wherein
the exteroceptive sensor system (315) includes two exteroceptive sensors (315a, 315b), preferably two Lidars (315a, 315b), which are at two side ends and at a front of the tractor truck, preferably at bumper level, and
the two exteroceptive sensors (315a, 315b) are preferably mounted at a front-left corner and a front-right corner of a bumper of the tractor truck.

16. A computerized system (200) for autonomously parking a vehicle (31) comprising a combination of a tractor truck and a trailer, wherein the tractor truck includes an exteroceptive sensor system (315), preferably at a front of the tractor truck, and wherein the computerized system (200) includes processing means configured to perform all the steps of a method according to any of claims **1** to **15.**

17. A vehicle (31), preferably a semi-trailer, comprising:
a combination of a tractor truck and a trailer, wherein the tractor truck includes a motion control unit and an exteroceptive sensor system (315), the latter preferably at a front of the tractor truck, and
a computerized system (200) according to claim **15,** wherein the computerized system is interfaced with each of the exteroceptive sensor system and the motion control unit to autonomously steer the vehicle, in operation.

18. A computer program product for autonomously parking a vehicle (31) comprising a combination of a tractor truck and a trailer, wherein the tractor truck includes an exteroceptive sensor system (315), preferably at a front of the tractor truck, the program instructions executable by processing means of a computerized device interfaced with each of the exteroceptive sensor system and a motion control unit of the tractor truck, to cause the processing means to perform all the steps of a method according to any of claims **1** to **15.**
